# EUROPÄISCHE PATENTSCHRIFT

(11) **EP 2 825 083 B1**
(45) Veröffentlichungstag und Bekanntmachung des Hinweises auf die Patenterteilung: **12.10.2016**
(21) Anmeldenummer: 13707152.8
(22) Anmeldetag: 26.02.2013
(51) Int. Cl.: A47L 7/00, A47L 5/36

(54) **STAUBSAUGER MIT WASSERBAD**
SUCTION CLEANER WITH WATER BATH
ASPIRATEUR A BAIN D'EAU

(30) Priorität: 15.03.2012 DE 102012102180
(43) Veröffentlichungstag der Anmeldung: 21.01.2015
(73) Patentinhaber: Pro-aqua International GmbH, 91522 Ansbach (DE)
(72) Erfinder: WEHNER, Jürgen, 91522 Ansbach (DE)
(74) Vertreter: Lermer, Christoph
(86) Internationale Anmeldenummer: PCT/EP2013/053836
(87) Internationale Veröffentlichungsnummer: WO 2013/135482

(56) Entgegenhaltungen:
- EP-A2- 1 600 090
- US-A- 6 055 700
- US-A1- 2009 265 882
- US-A1- 2010 139 032

## Beschreibung

### GEBIET DER ERFINDUNG

Die Erfindung betrifft Staubsauger, umfassend: einen Flüssigkeitsbehälter; und einen Saugkopf, der in einer ersten Position relativ zum Flüssigkeitsbehälter abnehmbar am Flüssigkeitsbehälter angeordnet ist.

### STAND DER TECHNIK

Es ist eine Vielzahl von Staubsaugern zur Reinigung von Räumen bekannt. Dabei wird durch einen Motor ein Luftstrom erzeugt, der über eine Düse Staub und andere Verschmutzungen ansaugt. Der Luftstrom wird im Staubsauger gefiltert, d. h. die Staub- und Schmutzpartikel werden aus dem Luftstrom extrahiert und zur späteren Entsorgung in einem Filter gesammelt.

Herkömmliche Staubsauger verwenden Filter aus Papier oder Kunstfasermaterialien. Bei diesen Systemen lässt jedoch die Saugkraft mit zunehmender Verschmutzung des Filters nach. Dies wirkt sich negativ auf die Reinigungskraft des Staubsaugers aus. Außerdem können angesaugte Partikel in die Umgebungsluft gelangen.

Bei sogenannten Wasserstaubsaugern wird anstelle des Papierfilters ein Wasserbad eingesetzt. Das Wasser ist in einem Tank untergebracht, in den die angesaugte Luft strömt. In der Regel ist der Tank abnehmbar am Staubsaugergehäuse angebracht, sodass verschmutztes Wasser einfach ersetzt werden kann. Das Wasserbad nimmt die Staub- und Schmutzpartikel auf und bindet diese. Die gereinigte Luft strömt, meist über einen Separator, in den mit dem Wassertank verbundenen Saugkopf, in dem der Motor untergebracht ist, und wird anschließend an die Umgebung abgegeben. Da Staub und Schmutz vollständig im Wasser gebunden werden, ist die abgegebene Luft bestmöglich gereinigt. Gesundheitliche Beschwerden, die durch Staub, Schmutz Hausstaubmilben u. ä. ausgelöst werden, können so verhindert werden.

Allerdings besteht bei Wasserstaubsaugern der Nachteil, dass stets mit Feuchtigkeit umgegangen werden muss, die sich an unerwünschten Stellen in den Bauteilen ansammelt. Ein Abtrocknen dieser Bauteile dauert in der Regel relativ lange.

Aus der US 6,055,700 A ist ein Vakuumgerät zur Aufnahme von nassen oder trockenen Stoffen mit einem Saugkopfverschluss mit Rastfunktion bekannt, welches den nächstliegenden Stand der Technik bildet.

Der Saugkopf des dort beschriebenen Vakuumgeräts ist in einer ersten Position relativ zum Sammelbehälter abnehmbar am Sammelbehälter angeordnet. Das Vakuumgerät weist ein Positionierelement auf, das so einstellbar ist, dass der Saugkopf in einer zweiten Position relativ zum Sammelbehälter anordenbar ist, wobei der Saugkopf in der zweiten Position relativ zur ersten Position um einen ersten Winkel größer als 0° geneigt ist. Die geneigte Position dient aber einzig der Installation und Verriegelung des Saugkopfes mit dem Deckel des Vakuumgeräts mittels des Positionierelements und stellt den ersten Schritte der Herstellung der Verbindung dar. Hierzu wird der Saugkopf zunächst auf dem Positionierelement aufgesetzt. Anschließend wird der Saugkopf nach unten abgesenkt, das Positionierelement nach außen gedrückt und verriegelt. Das Positionierelement dient somit der Arretierung des abnehmbaren Saugkopfes auf dem restlichen Staubsaugergehäuse.

Die US 2010/0139032 A1 beschreibt einen Nass-/ Trockenvakuumstaubsauger mit einem entfernbarem Aufnahmebehälter.

### TECHNISCHE AUFGABE

Es ist eine Aufgabe der vorliegenden Erfindung, einen Staubsauger mit Wasserbad bereitzustellen, bei dem der Umgang mit feuchten Bauteilen erleichtert wird.

### TECHNISCHE LÖSUNG

Diese Aufgabe wird gelöst durch einen Staubsauger gemäß dem Anspruch 1. Vorteilhafte Ausgestaltungen sind Gegenstand der abhängigen Ansprüche.

Der erfindungsgemäße Staubsauger umfasst: einen Flüssigkeitsbehälter; und einen Saugkopf, der in einer ersten Position relativ zum Flüssigkeitsbehälter abnehmbar am Flüssigkeitsbehälter angeordnet ist, wobei der Staubsauger ein Positionierelement aufweist, das so einstellbar ist, dass der Saugkopf in einer zweiten Position relativ zum Flüssigkeitsbehälter anordenbar ist, wobei der Saugkopf in der zweiten Position relativ zur ersten Position um einen ersten Winkel (γ) größer als 0° geneigt ist.

Der Saugkopf weist wenigstens ein Gehäuse und einen im Gehäuse angeordneten Saugmotor auf. Außerdem kann im Inneren des Gehäuses ein Separator vorgesehen sein. Die vom Saugmotor angesaugte Luft wird zunächst über einen Eintrittskanal in den Innenraum des Wasserbehälters geführt. Dort gibt die Luft Schmutz- und Staubpartikel ab, die im Wasserbad gebunden werden. Anschließend wird die Luft (evtl. über einen Separator) in den Saugkopf gesaugt und von dort aus an die Umgebung abgegeben.

In der ersten Position (Arbeits- oder Einsatzposition) ist der Saugkopf am Behälter befestigt, z.B. mittels eines Rastmechanismus, in der zweiten Position (Parkposition) liegt der Saugkopf geneigt auf dem Behälter und dem Positionierelement auf. Die geneigte Position bzw. Schrägposition gegenüber der Horizontalen (bzw. gegenüber dem Auflageuntergrund und/oder gegenüber der von der Oberkante der Behälteröffnung aufgespannten Ebene) führt dazu, dass Wasser, das während des Betriebs des "Wasserstaubsaugers" in den Motorkopf gelangt ist, schräg nach unten hin abfließt und dann in den Behälter hinein abfließt bzw. abtropft. Der Saugkopf nimmt somit, wenn er abgenommen wird, eine definierte Park- oder Auflageposition gegenüber dem Behälter ein. Auf diese Weise wird das Trocknen des Saugkopfs beschleunigt und verbessert.

Die Handhabung des Saugkopfs wird somit erleichtert, da dieser in feuchtem Zustand zum Trocknen nicht vom Behälter entfernt werden muss. Er wird lediglich geneigt auf den Behälter aufgelegt. Der Saugkopf, insbesondere die Bereiche um den Separator und das Gebläse des Saugmotors, können besser abtrocknen. Eine Ansammlung von Feuchtigkeit (mit negativen Folgen wie Schimmel oder Geruchsbildung) kann verhindert werden.

Der erste Winkel (γ) liegt vorzugsweise zwischen 3° und 15°, insbesondere zwischen 3° und 10°. Bei diesen Winkeln wird eine zum Abtrocknen ausreichende Neigung erreicht, bei gleichzeitig stabiler Lage des Saugkopfs auf der Oberseite des Behälters.

Das Positionierelement ist insbesondere als Bügel ausgebildet.

Vorzugsweise ist das Positionierelement verschwenkbar am Flüssigkeitsbehälter angeordnet. Der Bügel wirkt damit wie der Handgriff des Behälters, vergleichbar dem Handgriff eines Eimers, und kann, neben seiner Funktion als Positionierelement, auch als Handgriff dienen.

Das Positionierelement weist wenigstens eine erste Einstellposition auf, die der ersten Position des Saugkopfes entspricht, und eine zweite Einstellposition, die der zweiten Position des Saugkopfes entspricht. Die Entsprechung der Positionen bedeutet, dass in der ersten Einstellposition des Positionierelements der Saugkopf in seiner ersten Position (Einsatzposition) am Behälter angeordnet ist, in der zweiten Einstellposition des Positionierelements der Saugkopf in seiner zweiten Position (Parkposition) am Behälter angeordnet ist bzw. auf dem Behälter aufliegt.

Das Positionierelement ist vorzugsweise in der ersten Einstellposition und/oder in der zweiten Einstellposition durch einen Arretiermechanismus, insbesondere durch einen Rastmechanismus, festlegbar. Der Mechanismus ist so ausgelegt, dass das Positionierelement unter dem Einfluss der Gewichtskraft des auf dem Positionierelement aufliegenden Saugkopfs seine Position beibehält. Lediglich, wenn zusätzliche Kraft von außen auf das Positionierelement einwirkt, kann die Arretierung/Verrastung gelöst und das Positionierelement in die erste Einstellposition gebracht werden. Dieses Entrasten kann beispielsweise durch Ausüben einer Kraft auf die Oberseite des Saugkopfs bewerkstelligt werden.

Das Positionierelement kann eine dritte Einstellposition aufweisen, in der das Positionierelement als Handgriff zum Transport des Flüssigkeitsbehälters einsetzbar ist. Ein Verrasten oder anderes Festlegen in dieser dritten Einstellposition ist ebenfalls denkbar.

Das Positionierelement weist insbesondere eine dem Saugkopf zugewandte Kante auf, die in der ersten Einstellposition parallel und/oder bündig zu einer Oberkante der eine obere Öffnung des Flüssigkeitsbehälters begrenzenden Wand angeordnet ist.

In einer Ausführungsform der Erfindung weist das Positionierelement eine dem Saugkopf zugewandte Kante auf, die in der zweiten Einstellposition um einen zweiten Winkel (β) größer als 0° gegenüber einer Oberkante der eine obere Öffnung des Flüssigkeitsbehälters begrenzenden Wand geneigt ist.

Die Oberkante ist in der bestimmungsgemäßen Einsatzposition des Behälters in der Regel parallel zum Untergrund ausgerichtet. Eine Neigung des Saugkopfs stellt somit eine Neigung des Saugkopfs gegenüber der Oberkante und dem Untergrund dar.

Der zweite Winkel (β) liegt vorzugsweise zwischen 5° und 20°, insbesondere zwischen 6° und 15°. Es gibt einen funktionalen Zusammenhang zwischen dem ersten Winkel und dem zweiten Winkel.

Der Saugkopf kann Mittel zur stabilen Ablage des Saugkopfes auf einer ebenen Fläche aufweisen. So kann der Saugkopf in einer stabilen Lage auf dem Boden abgelegt werden, wenn er vom Behälter entfernt wird. Die Position kann dabei so geneigt sein, dass die Unterseite des Gehäuses (schräg) nach oben weist, also kein Wasser aus dem Innenraum des Gehäuses abfließen kann. Eine "Zwischenlagerung" des Saugkopfs, beispielsweise zum Entleeren des Wasserbehälters, wird so ermöglicht, ohne die Umgebung durch abtropfendes (Schmutz-)Wasser zu verunreinigen.

Der Saugkopf kann ein Trägerteil zur Auflage des Flüssigkeitsbehälters auf dem Trägerteil aufweisen. Das Trägerteil ist in der Regel wie ein verfahrbarer Untersatz ausgebildet.

Das Trägerteil weist vorzugsweise eine Vertiefung auf, deren Querschnitt dem Querschnitt der Bodenfläche des Flüssigkeitsbehälters entspricht. So ist eine passgenaue Ablage des Behälters auf dem Trägerteil gewährleistet, ohne dass der Behälter gegenüber dem Trägerteil seitlich bewegt werden kann.

Das Trägerteil kann Rollen zur bewegbaren Auflage des Trägerteils auf dem Untergrund aufweisen. Der Staubsauger ist somit insgesamt auf dem Untergrund verfahrbar.

Die Erfindung betrifft im Ergebnis einen Staubsauger mit einem Trägerteil, einem Flüssigkeitstank und einem Saugkopf. Am Flüssigkeitstank ist ein Bügel verschwenkbar befestigt, sodass der Bügel als Positionierelement für den Saugkopf dienen kann. Der Saugkopf kann in einer Parkposition, die gegenüber der Oberkante des Tanks um einen Winkel γ größer als 0° geneigt ist, angeordnet werden, indem der Saugkopf auf dem Bügel aufliegt. Der Bügel ist in der Parkposition mit dem Behälter verrastet.

### KURZE BESCHREIBUNG DER FIGUREN

Weitere Merkmale und Vorteile der Erfindung ergeben sich aus der Beschreibung eines bevorzugten Ausführungsbeispiels anhand der Figuren.
- Figur 1: ist eine perspektivische Ansicht einer Ausführungsform eines Staubsaugers gemäß der vorliegenden Erfindung;
- Figur 2: ist eine Seitenansicht der Ausführungsform aus der Figur 1;
- Figur 3a-3c: zeigen Seitenansichten der Ausführungsform aus der Figur 1 in verschiedenen Positionen;
- Figur 4a, 4b: zeigen Ansichten von Komponenten des Staubsaugers der Ausführungsform aus der Figur 1;
- Figur 5: ist eine perspektivische Ansicht von Komponenten des Staubsaugers der Ausführungsform aus der Figur 1; und
- Figur 6: ist eine weitere Seitenansicht der Ausführungsform aus der Figur 1.
- Figur 7: ist eine Detailansicht der Ausführungsform aus der Figur 1.

### BESCHREIBUNG EINER BEVORZUGTEN AUSFÜHRUNGSFORM

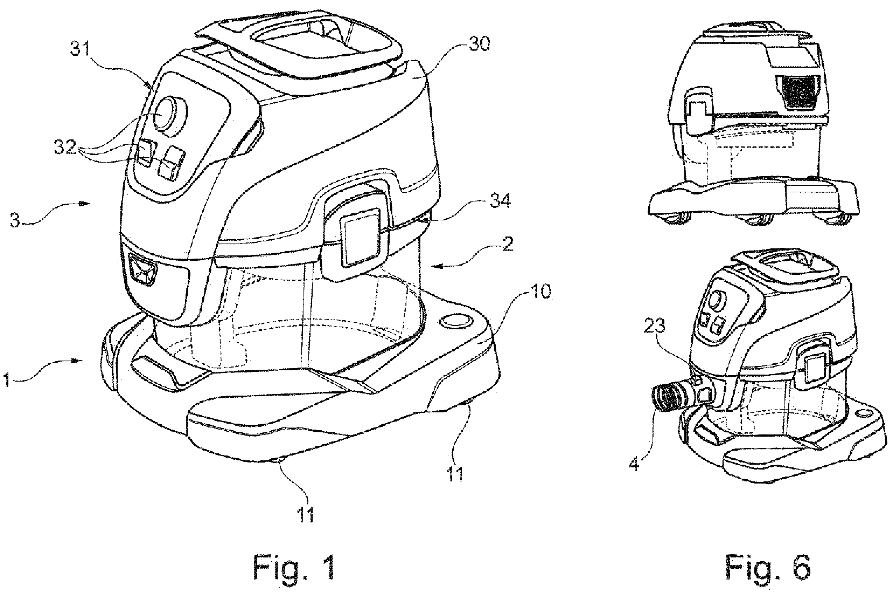

In der Figur 1 ist eine perspektivische Ansicht der bevorzugten Ausführungsform des erfindungsgemäßen Staubsaugers dargestellt.

Der Staubsauger umfasst drei wesentliche Komponenten, nämlich ein Trägerteil 1, einen Flüssigkeits- bzw. Wassertank 2 und einen Saugkopf 3.

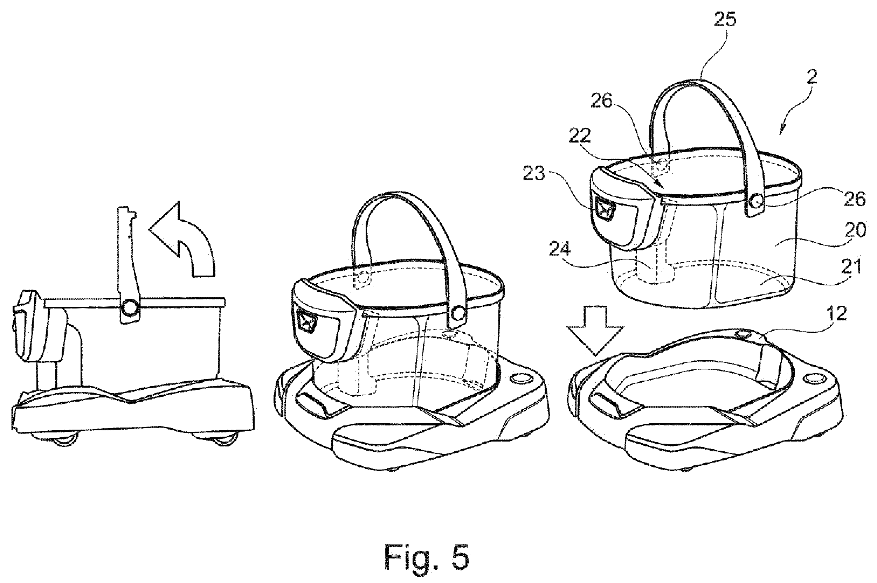

Das Trägerteil 1 weist einen Grundkörper 10 und Rollen 11 auf, die ein komfortables Verfahren des Trägerteils 1 auf dem Boden erlauben. Im Grundkörper 10 ist eine Vertiefung 12 (vgl. Figur 5) ausgebildet, in die der Tank 2 passgenau eingesetzt werden kann, sodass der Tank 2 gegenüber seitlichen Bewegungen gesichert ist.

Der Tank 2 weist, wie in der Figur 5 dargestellt, eine Seitenwand 20 und eine Bodenwand 21 auf, die einen Innenraum 22 begrenzen. Der Innenraum 22 ist bei Verwendung des Staubsaugers wenigstens teilweise mit Wasser befüllt. Außerdem weist der Tank 2 ein Anschlusselement 23 zum Anschluss eines Schlauchs 4 (vgl. Figur 6) auf. Das Anschlusselement weist eine (in der Figur 5 abgedeckte) Öffnung auf, die in einen Kanal 24 mündet, der in den Innenraum 22 mündet. Durch den Schlauch 4 angesaugte Luft strömt demnach durch die Öffnung des Anschlusselements 23 über den Kanal 24 in den Innenraum 22 des Wassertanks 2.

Außerdem weist der Tank 2 einen Bügel 25 (vgl. Figur 5) auf, der über beidseitig am Aufnahmebehälter (der Aufnahmebehälter besteht aus den Wänden 20 und 21) angeordnete Drehgelenke 26 relativ zum Behälter verschwenkbar ist. Der Bügel 25 kann, wie etwa in der Figur 5 dargestellt, um etwa 90° relativ zur Behälteroberkante nach oben verschwenkt und als Tragegriff verwendet werden. Der Tank 2 kann auf diese Weise einfach vom Trägerteil 1 abgehoben und zu einer Frischwasser-/Abwasserstation transportiert werden.

Der Saugkopf 3 ist passgenau und abnehmbar an der Oberseite des Wassertanks 2 befestigt. Der Saugkopf 3 weist ein Gehäuse 30 auf, in dem im Wesentlichen ein Separator und ein Saugmotor untergebracht sind. Über den Separator (nicht dargestellt) wird die gereinigte Luft vom Saugmotor (nicht dargestellt) aus dem Innenraum 22 des Wassertanks 2 angesaugt und anschließend an die Umgebung abgegeben.

Der Saugkopf 3 weist außerdem ein Bedienfeld 31 mit Knöpfen 32 zum An-/Ausschalten oder zum Einstellen, z. B. der Saugkraft, des Staubsaugers auf.

Es ist jedoch bei der Verwendung des Staubsaugers unvermeidlich, dass der Separator mit Wasser in Berührung kommt und Feuchtigkeit sogar bis in den Bereich des Saugmotors vordringt. Dies ist unerwünscht, da diese Bereiche dadurch leicht verschmutzen und sich Gerüche und Schimmel bilden können.

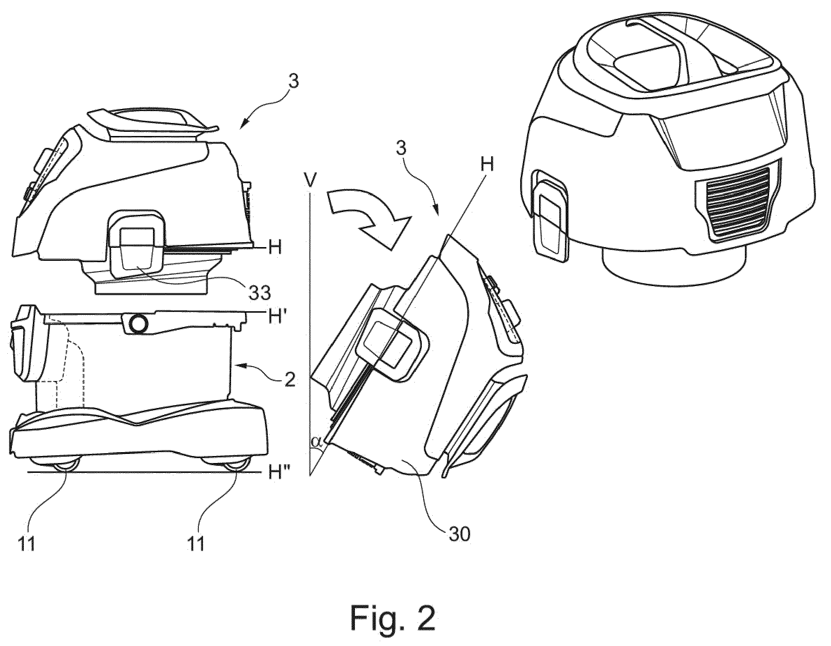

Außerdem ist es unkomfortabel, mit feuchten Komponenten zu hantieren. Wird beispielsweise der Saugkopf 3 vom Tank 2 abgenommen (vgl. Figur 2) und ist der Saugkopf 3 innen noch feucht, so können Wassertropfen insbesondere im Umgebungsbereich des Staubsaugers auf den Boden tropfen und den Boden (der unter Umständen gerade gereinigt wurde) verschmutzen.

Der abgenommene Saugkopf 3 wird, wie in der Figur 2 rechts dargestellt, nach dem Abnehmen in einem Winkel α (zwischen der Horizontalen Ebene H und der vertikalen Ebene V) von ca. 33° abgelegt. Das Gehäuse 30 ist dabei so ausgebildet, dass der Saugkopf 3 in dieser Position stabil auf dem Boden abgelegt werden kann. Die Ebene H ist so definiert, dass die Ebene horizontal ausgerichtet ist, wenn der Saugkopf 3 in Arbeitsposition (vgl. Figur 1) am Tank 2 angeordnet und das Trägerteil 1 auf einer horizontalen Ebene bzw. einem horizontalen Untergrund abgestellt ist.

Der Saugkopf 3 kann im Übrigen durch einen Verschluss, z. B. durch einen lösbaren Schnappverschluss 33, abnehmbar am Tank 2 befestigt sein.

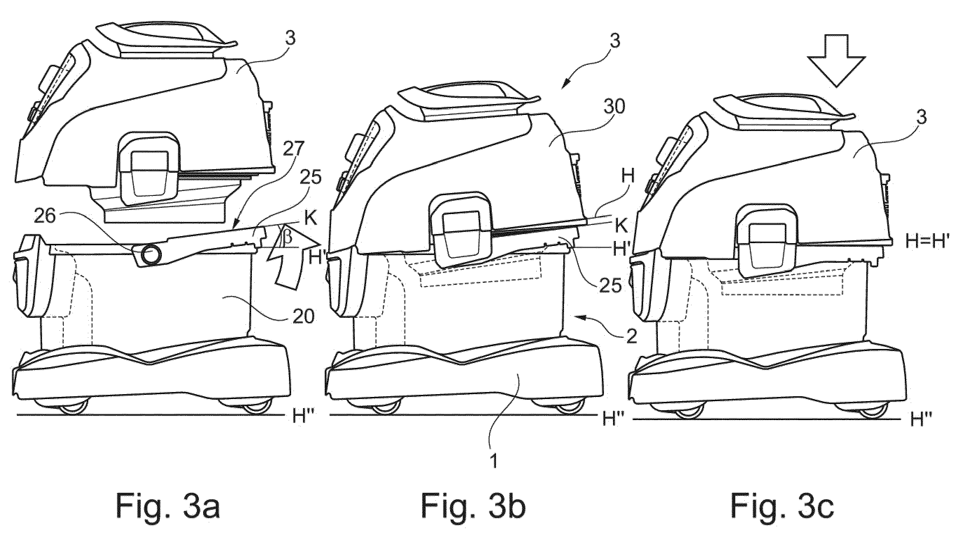

In den Figuren 3a-3c ist der Staubsauger in verschiedenen Zuständen dargestellt. Dabei wird eine weitere erfindungsgemäße Funktion des Bügels 25 deutlich, nämlich die Funktion als Positionierelement für den Saugkopf 3.

In der Figur 3c ist der Saugkopf 3 in einer Arbeits- oder Einsatzposition dargestellt. Der Saugkopf 3 ist dabei so am Tank 2 befestigt, dass die Ebene H horizontal (bzw. parallel zur Auflageebene H") ausgerichtet ist. Auch der Bügel 25 ist in diesem Zustand in bzw. parallel zur Ebene H ausgerichtet. Die Ebene H ist dabei auch parallel zur Ebene H', die durch die Oberkante des Behälters 20, 21 bestimmt wird (vgl. Figur 3a), ausgerichtet.

In der Figur 3a ist der Saugkopf 3 vom Tank 2 gelöst und abgehoben dargestellt. Der Bügel 25, der in der Arbeitsposition des Saugkopfes 3 (vgl. Figur 1) parallel ausgerichtet war, ist nun um einen Winkel β von ca. 10° gegenüber der Ebene H' nach oben verschwenkt. Die dem Behälter 20, 21 abgewandte Kante 27 des Bügels 25 spannt eine Ebene K auf, die den Winkel β mit der Ebene H' einschließt.

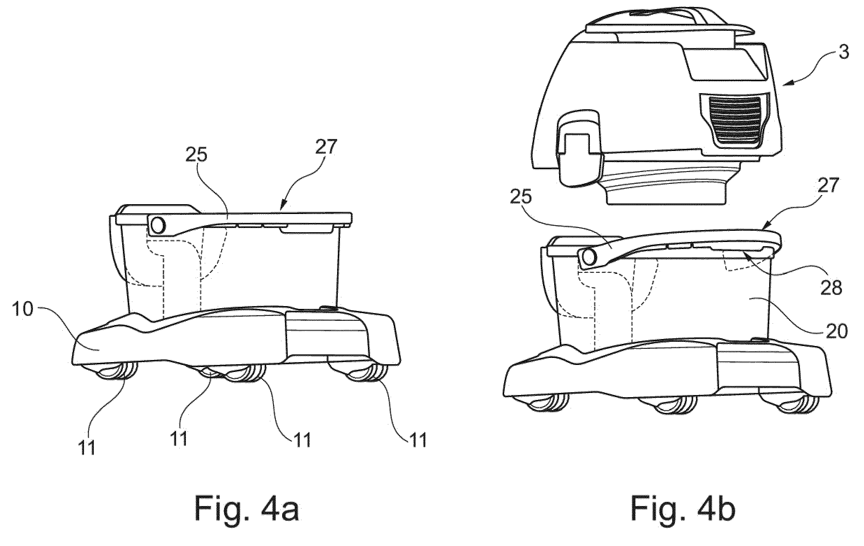

Der Bügel kann beispielsweise durch einen Rastmechanismus 28 (vgl. auch Fig. 4b), der eine Rastnase 28' (vgl. Fig. 5) aufweist, die sich auf den oberen Rand des Behälters aufliegt, stabil in der Position gemäß Figur 3a festgelegt sein. Der Rastmechanismus umfasst einen Vorsprung und/oder eine Vertiefung auf, der/die am Bügel 25 ausgebildet ist und zur Behälterwand 20 weist. Der Vorsprung bzw. die Vertiefung wirkt mit einem entsprechenden Vorsprung bzw. einer entsprechenden Vertiefung, die im oberen Bereich der Behälterwand 20 ausgebildet ist, zusammen. Die Vorsprünge/Vertiefungen wirken so zusammen, dass erst bei Ausübung einer Mindestkraft auf die Oberkante 27 des Bügels 25 die Verrastung gelöst wird und der Bügel in die Grundposition geschwenkt werden kann. Durch Ausüben dieser Mindestkraft/dieses Mindestdrehmoments wird die Rastnase über den Rand des Behälters geschoben und rastet in der Arbeitsposition (in der die Kante 27 des Bügels 25 horizontal in der Ebene H' liegt) ein. Die Rastnase rastet dann unterhalb eines Falzes des Behälterrandes ein.

In dieser Ausführungsform wird der Bügel 25 in der Parkposition durch einen gehalten.

Auf diese Weise wird der Bügel 25 lösbar in einer Parkposition fixiert, in der Feuchtigkeit aus dem Saugkopf 3 rasch und vollständig in den Tank 2 abfließen kann.

In der Parkposition gemäß Figur 3b kann der Saugkopf 3 auf den Bügel 25 (bzw. die Kante 27 des Bügels 25) aufgelegt werden und der Bügel 25 den Saugkopf 3 abstützen. Die Ebene H des Saugkopfes 3 ist dabei nicht mehr horizontal bzw. parallel zur Ebene H' und zum Untergrund H" ausgerichtet, sondern gegenüber H' und H" um einen Winkel γ von ca. 6° geneigt. Der Kopf 3 ist damit schräg abgelegt. Wasser, das sich im Inneren des Gehäuses 30 befindet, läuft durch die Schrägstellung nach unten hin ab und gelangt in den Innenraum 22 des Tanks 2.

Die in der Figur 3b dargestellte Position wird als Parkstellung bezeichnet, da der Staubsauger in dieser Anordnung der Bauteile nicht einsatzbereit ist. Die in der Figur 3c dargestellte Position wird als Arbeits- oder Einsatzstellung bezeichnet, da der Staubsauger in dieser Anordnung der Bauteile in Betrieb gehen bzw. in Betrieb sein kann.

In einer anderen Ausführungsform der Erfindung kann der Bügel 25 durch Haftreibung in den Gelenken bzw. Lagern 26 in einer Position gehalten werden.

In den Figuren 4a und 4b sind die beiden Positionen des Bügels 25 dargestellt, nämlich die Grundposition mit einer durch die Kante 27 aufgespannten horizontalen Ebene parallel und bündig zur Oberkante des Behälters 20, 21 in Figur 4a, und die Parkposition mit einer durch die Kante 27 aufgespannten Ebene, die zur Horizontalen H" und zur Oberkante H' des Behälters 20, 21 geneigt und mit der Oberkante nicht bündig ist, in Figur 4b. H' und K schließen einen Winkel β ein, H' und H einen Winkel γ.

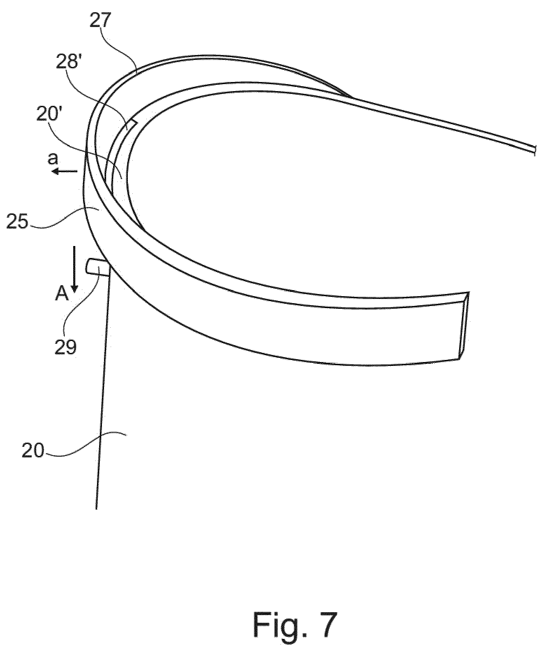

Die Stellung des Bügels 25 in der Parkposition ist in der Figur 7 schematisch skizziert. Die Rastnase 28' liegt auf dem Behälterrand 20' auf und hält so den Bügel 25 gegenüber einer durch den Pfeil A symbolisierten Kraft-/Drehmomenteinwirkung (A ist in Richtung des Behälterbodens gerichtet) in der Position. Somit erstreckt sich die obere Kante 27 des Bügels 25 über die durch den Behälterrand 20' bestimmte Ebene hinaus. Erst bei Überschreiten eines bestimmten Werts A schiebt sich die Rastnase 28' (beispielsweise mittels einer Abschrägung der Auflagefläche gegenüber der Horizontalen) nach außen (Pfeil a) und der Bügel 25 lässt sich nach unten in die Arbeitsposition schieben. Es kann ein Anschlag 29 vorgesehen sein, der den Weg des Bügels nach unten begrenzt.

## Patentansprüche

1. Staubsauger mit Wasserbad, umfassend:
einen Flüssigkeitsbehälter (2), der zumindest teilweise mit Wasser befüllt ist, um Schmutz und Staub zu binden; und
einen Saugkopf (3), der in einer ersten Position relativ zum Flüssigkeitsbehälter (2) abnehmbar am Flüssigkeitsbehälter (2) angeordnet ist und der Staubsauger ein Positionierelement (25) aufweist, das so einstellbar ist, dass der Saugkopf (3) in einer zweiten Position relativ zum Flüssigkeitsbehälter (2) anordenbar ist, wobei der Saugkopf (3) in der zweiten Position relativ zur ersten Position um einen ersten Winkel (γ) größer als 0° geneigt ist und die geneigte zweite Position dem Abtropfen und Trocknen des Saugkopfes (3) dient.

2. Staubsauger nach Anspruch 1,
**dadurch gekennzeichnet, dass**
der erste Winkel (γ) zwischen 3° und 15° liegt.

3. Staubsauger nach Anspruch 1 oder 2,
**dadurch gekennzeichnet, dass**
das Positionierelement (25) als Bügel ausgebildet ist.

4. Staubsauger nach einem der vorhergehenden Ansprüche,
**dadurch gekennzeichnet, dass**
das Positionierelement (25) verschwenkbar am Flüssigkeitsbehälter (2) angeordnet ist.

5. Staubsauger nach einem der vorhergehenden Ansprüche,
**dadurch gekennzeichnet, dass**
das Positionierelement (25) wenigstens eine erste Einstellposition aufweist, die der ersten Position des Saugkopfes (3) entspricht, und eine zweite Einstellposition, die der zweiten Position des Saugkopfes (3) entspricht.

6. Staubsauger nach einem der vorhergehenden Ansprüche,
**dadurch gekennzeichnet, dass**
das Positionierelement (25) in der ersten Einstellposition und/oder in der zweiten Einstellposition durch einen Arretiermechanismus, insbesondere einen Rastmechanismus festlegbar ist.

7. Staubsauger nach einem der vorhergehenden Ansprüche,
**dadurch gekennzeichnet, dass**
das Positionierelement (25) eine dritte Einstellposition aufweist, in der das Positionierelement (25) als Handgriff zum Transport des Flüssigkeitsbehälters (2) einsetzbar ist.

8. Staubsauger nach einem der vorhergehenden Ansprüche,
**dadurch gekennzeichnet, dass**
das Positionierelement (25) eine dem Saugkopf (3) zugewandte Kante aufweist, die in der ersten Einstellposition parallel und/oder bündig zu einer Oberkante der eine obere Öffnung des Flüssigkeitsbehälters (2) begrenzenden Wand (20) angeordnet ist.

9. Staubsauger nach einem der vorhergehenden Ansprüche,
**dadurch gekennzeichnet, dass**
das Positionierelement (25) eine dem Saugkopf (3) zugewandte Kante aufweist, die in der zweiten Einstellposition um einen zweiten Winkel (β) größer als 0° gegenüber einer Oberkante der eine obere Öffnung des Flüssigkeitsbehälters (2) begrenzenden Wand (20) geneigt ist.

10. Staubsauger nach Anspruch 9,
**dadurch gekennzeichnet, dass**
der zweite Winkel (β) zwischen 5° und 20° liegt.

11. Staubsauger nach einem der vorhergehenden Ansprüche,
**dadurch gekennzeichnet, dass**
der Saugkopf (3) Mittel zur stabilen Ablage des Saugkopfes (3) auf einer ebenen Fläche aufweist.

12. Staubsauger nach einem der vorhergehenden Ansprüche,
**dadurch gekennzeichnet, dass**
der Staubsauger ein Trägerteil (1) zur Auflage des Flüssigkeitsbehälters (2) auf dem Trägerteil (1) aufweist.

13. Staubsauger nach Anspruch 12,
**dadurch gekennzeichnet, dass**
das Trägerteil (1) eine Vertiefung aufweist, deren Querschnitt dem Querschnitt der Bodenfläche des Flüssigkeitsbehälters (2) entspricht.

14. Staubsauger nach Anspruch 12 oder 13,
**dadurch gekennzeichnet, dass**
das Trägerteil (1) Rollen (11) zur bewegbaren Auflage des Trägerteils (1) auf dem Untergrund aufweist.

## Claims

1. Vacuum cleaner with water container, comprising:
a liquid container (2); which is at least partially filled with water to bind dirt and dust and
a suction head (3), which is arranged in a first position, relative to the liquid container (2), such that it can be removed from the liquid container (2) and the vacuum cleaner has a positioning element (25), which can be adjusted such that the suction head (3) can be arranged in a second position relative to the liquid container (2), wherein the suction head (3), in the second position relative to the first position, is inclined at a first angle (γ) greater than 0° and the second inclined position is for draining and drying of the suction head (3).

2. Vacuum cleaner in accordance with claim 1,
**characterised by** the fact that
the first angle (γ) lies between 3° and 15°.

3. Vacuum cleaner in accordance with claims 1 or 2,
**characterised by** the fact that
the positioning element (25) is configured as a bracket.

4. Vacuum cleaner in accordance with any of the previous claims,
**characterised by** the fact that
the positioning element (25) is pivotably arranged at the liquid container (2).

5. Vacuum cleaner in accordance with any of the previous claims,
**characterised by** the fact that
the positioning element (25) has at least a first setting position, which corresponds to the first position of the suction head (3), and a second setting position, which corresponds to the second position of the suction head (3).

6. Vacuum cleaner in accordance with any of the previous claims,
**characterised by** the fact that
the positioning element (25) can be arrested in the first setting position and/or in the second setting position by an arresting mechanism, especially a latching mechanism.

7. Vacuum cleaner in accordance with any of the previous claims,
**characterised by** the fact that
the positioning element (25) has a third setting position in which the positioning element (25) can serve as a handle for transporting the liquid container (2).

8. Vacuum cleaner in accordance with any of the previous claims,
**characterised by** the fact that
the positioning element (25) has an edge which faces the suction head (3) and which, in the first position, is arranged parallel and/or flush with a top edge of the wall (20) bounding an upper opening of the liquid container (2).

9. Vacuum cleaner in accordance with any of the previous claims,
**characterised by** the fact that
the positioning element (25) has an edge which faces the suction head (3) and which, in the second position, is inclined at a second angle (β) greater than 0° relative to a top edge of the wall (20) bounding an upper opening of the liquid container (2).

10. Vacuum cleaner in accordance with claim 9,
**characterised by** the fact that
the second angle (β) lies between 5° and 20°.

11. Vacuum cleaner in accordance with any of the previous claims,
**characterised by** the fact that
the suction head (3) has means for allowing the suction head (3) to rest stably on a planar surface.

12. Vacuum cleaner in accordance with any of the previous claims,
**characterised by** the fact that
the vacuum cleaner has a carrier part (1) for allowing the liquid container (2) to lie on the carrier part (1).

13. Vacuum cleaner in accordance with claim 12,
**characterised by** the fact that
the carrier part (1) has a recess, whose cross-section corresponds to the cross-section of the bottom surface of the liquid container (2).

14. Vacuum cleaner in accordance with claims 12 or 13,
**characterised by** the fact that
the carrier part (1) has rollers (11) for allowing the carrier part (1) to lie movably on the substrate.

## Revendications

1. Aspirateur avec bain d'eau comprenant :
un réservoir de liquide (2) qui est rempli au moins partiellement d'eau pour lier la saleté et la poussière et
une tête d'aspiration (3) qui est placée sur le réservoir de liquide (2) en pouvant être enlevée dans une première position par rapport au réservoir de liquide (2) l'aspirateur présentant un élément de positionnement (25) qui est réglable de telle manière que la tête d'aspiration (3) peut être placée dans une seconde position par rapport au réservoir de liquide (2), la tête d'aspiration (3) étant inclinée, dans la seconde position par rapport à la première position, d'un premier angle (γ) plus grand que 0° et
la seconde position inclinée servant à l'égouttage et au séchage de la tête d'aspiration (3).

2. Aspirateur selon la revendication 1, **caractérisé en ce que** le premier angle (γ) se situe entre 3° et 15°.

3. Aspirateur selon la revendication 1 ou 2, **caractérisé en ce que** l'élément de positionnement (25) est configuré comme un étrier.

4. Aspirateur selon l'une des revendications précédentes, **caractérisé en ce que** l'élément de positionnement (25) est placé pivotant sur le réservoir de liquide (2).

5. Aspirateur selon l'une des revendications précédentes, **caractérisé en ce que** l'élément de positionnement (25) présente au moins une première position de réglage qui correspond à la première position de la tête d'aspiration (3) et une seconde position de réglage qui correspond à la seconde position de la tête d'aspiration (3).

6. Aspirateur selon l'une des revendications précédentes, **caractérisé en ce que** l'élément de positionnement (25) peut être fixé dans la première position de réglage et/ou dans la seconde position de réglage par un mécanisme d'arrêt, en particulier par un mécanisme d'encliquetage.

7. Aspirateur selon l'une des revendications précédentes, **caractérisé en ce que** l'élément de positionnement (25) présente une troisième position de réglage dans laquelle l'élément de positionnement (25) peut être utilisé comme poignée pour le transport du réservoir de liquide (2).

8. Aspirateur selon l'une des revendications précédentes, **caractérisé en ce que** l'élément de positionnement (25) présente une arête tournée vers la tête d'aspiration (3) qui est placée, dans la première position de réglage, parallèle et/ou à fleur avec une arête supérieure de la paroi (20) qui délimite une ouverture supérieure du réservoir de liquide (2).

9. Aspirateur selon l'une des revendications précédentes, **caractérisé en ce que** l'élément de positionnement (25) présente une arête tournée vers la tête d'aspiration (3) qui est inclinée, dans la seconde position de réglage, d'un second angle (β) plus grand que 0° par rapport à une arête supérieure de la paroi (20) qui délimite une ouverture supérieure du réservoir de liquide (2).

10. Aspirateur selon la revendication 9, **caractérisé en ce que** le second angle (β) se situe entre 5° et 20°.

11. Aspirateur selon l'une des revendications précédentes, **caractérisé en ce que** la tête d'aspiration (3) présente des moyens pour la pose stable de la tête d'aspiration (3) sur une surface plane.

12. Aspirateur selon l'une des revendications précédentes, **caractérisé en ce que** l'aspirateur présente une partie de support (1) pour poser le réservoir de liquide (2) sur la partie de support (1).

13. Aspirateur selon la revendication 12, **caractérisé en ce que** la partie de support (1) présente un renfoncement dont la section correspond à la section de la surface du fond du réservoir de liquide (2).

14. Aspirateur selon la revendication 12 ou 13, **caractérisé en ce que** la partie de support (1) présente des roulettes (11) pour la pose mobile de la partie de support (1) sur le sol.
